# EUROPEAN PATENT APPLICATION

(11) **EP 4 625 566 A1**
(43) Date of publication of application: **01.10.2025**
(21) Application number: 24904043.7
(22) Date of filing: 21.11.2024
(51) Int. Cl.: H01M 10/04

(54) **PROCESS CONDITION DERIVATION METHOD FOR MANUFACTURING CURVED BATTERY**

(30) Priority: 13.12.2023 KR 20230180686
(71) Applicant: LG Energy Solution, Ltd., Seoul 07335 (KR)
(72) Inventor: HUR, Jae Yong, Daejeon 34122 (KR)
(74) Representative: Plasseraud IP
(86) International application number: PCT/KR2024/018498
(87) International publication number: WO 2025/127477

(57) **Abstract**

A method for deriving process conditions for manufacturing a curved battery with a pressing jig including a first operation of checking a target value of a curvature of a bottom surface of a battery, a second operation of selecting key factors for manufacturing a battery having the curvature, and a third operation of verifying the key factors selected in the second operation by a predetermined experimental design method. The verified key factors may be used to form a curved battery having a target value for the curvature with the pressing jig.

## Description

### TECHNICAL FIELD

The present disclosure relates to a method for deriving process conditions for manufacturing a curved battery, and more particularly, to a method for deriving actual process conditions for manufacturing a curved battery having a specific curvature on an outer side of widthwise left and right portions or lengthwise top and bottom portions.

### BACKGROUND

Recently, as the development of technology and demand for mobile devices has increased, demand for secondary batteries as an energy source has rapidly increased.

Representatively, there is high demand for prismatic secondary batteries and pouch-type secondary batteries that may be applied to electronic devices, such as mobile phones, due to a thin thickness thereof in terms of battery shape.

As electronic devices have become increasingly smaller and thinner according to consumer tastes, the shape of has also been required to be smaller and thinner in order to minimize unnecessary space waste.

Therefore, it is necessary to implement the shape of batteries variously according to the shape of devices and at the same time efficiently utilize an internal space of devices.

In particular, recently, the design of devices has become a very important factor in the consumer's product selection, so various designs have been planned, breaking away from the conventional flat design considering productivity, etc.

For example, recently, devices, such as mobile phones and laptops, have been designed with a certain curved surface for ergonomic design.

In this manner, many designs with curved surfaces on the outer surface have been developed and put into practical use, but most of the secondary batteries that have been commercialized are flat, which results in unnecessary space waste.

In addition, due to the curves, it may be difficult to securely mount secondary batteries and the batteries may move to be damaged by external impact.

Specifically, as wearable functions of various IT devices have been noticed, curved designs that consider the shape of a human face have begun to appear in smartphones, and accordingly, curved batteries according to the design requests of mobile phone customers have become necessary.

In the related art, there were only flat batteries, so manufacturing technology to create such curved shapes is necessary.

Since the exterior of a pouch-type battery is formed of a pouch material, the pouch-type battery may be deformed according to a force, and this characteristic may be used to implement the battery shape as a curved shape.

However, although such curved battery manufacturing has been actively studied recently, it has not been known whether there is a safety problem even if a curved battery is manufactured.

Accordingly, there is an urgent need for a technology for manufacturing a pouch-type battery with an appropriate curved shape by deriving various factors within a range that does not affect the safety of the pouch-type battery.

### SUMMARY

### [TECHNICAL PROBLEMS]

According to an aspect of the present disclosure, the present disclosure provides a method for deriving process conditions for manufacturing a curved battery in order to derive various factors within a range that does not affect the safety of a battery when manufacturing a curved battery having a specific curvature on an outer side of widthwise left and right portions or lengthwise top and bottom portions.

### [TECHNICAL SOLUTION]

According to an aspect of the present disclosure, a method for deriving process conditions for manufacturing a curved battery includes: a first operation of checking a target value of a curvature of a bottom surface of a battery; a second operation of selecting key factors for manufacturing a battery having the curvature; and a third operation of verifying the key factors selected in the second operation by a predetermined experimental design method.

In the first operation, a position in which the curvature is to be measured on the bottom surface of the battery may be selected as widthwise left and right portions or lengthwise top and bottom portions.

The key factors may be a curvature value of a pressing jig, a pressure and temperature during pressing, and a pressing time.

The pressure and temperature during pressing and the pressing time may be set to within 80% of pressure, temperature, and time used when manufacturing the battery.

The curvature value of the pressing jig may be selected to be smaller than the target value of the curvature of the bottom surface of the battery.

In the third operation, after manufacturing the battery for the four conditions of the key factors to be verified: the curvature value of the pressing jig, the pressure during pressing, the temperature during pressing, and the pressing time at three different levels, the curvature may be measured at each position on the bottom surface of the battery selected in the first operation.

An effective ranking may be selected among the four conditions of the curvature value of the pressing jig, the pressure during pressing, the temperature during pressing, and the pressing time using statistical techniques, and a condition value that produces a result value closest to the target value of the curvature may be collected.

After manufacturing the battery for the four conditions of the curvature value of the pressing jig, the pressure during pressing, the temperature during pressing, and the pressing time at three levels with different values, the battery was stored at room temperature for 3 to 4 hours, and then, the curvature of each battery may be first measured.

A tray having a curvature corresponding to the first measured curvature of the battery may be designed.

After manufacturing the battery for the four conditions of the curvature value of the pressing jig, the pressure during pressing, the temperature during pressing, and the pressing time at three levels with different values, it may be determined whether there is a spring-back phenomenon in which the curvature returned to its original state, and if so, to what extent.

After the battery is manufactured, a condition of a least amount of spring-back occurrence during a certain leaving time and whether the amount of occurrence is within the target curvature value may be checked.

After the battery packed in the tray arrives at a final customer, the curvature of the battery may be measured to find a condition with a least spring-back phenomenon, and then a final verification may be performed.

After manufacturing the battery for four conditions of the curvature value of the pressing jig, the pressure during pressing, the temperature during pressing, and the pressing time at three levels with different values, performance, environmental reliability, and safety of the battery may be verified.

### [EFFECT]

According to the method for deriving process conditions for manufacturing a curved battery according to the present disclosure, when manufacturing a curved battery having a specific curvature on the outer side of the widthwise left and right portions or the lengthwise top and bottom portions, by deriving various factors within a range that does not affect the safety of the battery, the time required to set conditions for manufacturing the curved battery shape may be reduced and market access by competitors may be prevented.

### BRIEF DESCRIPTION OF THE DRAWING

FIG. 1 is a perspective view of a pouch-type battery.
FIG. 2 is a diagram schematically illustrating the side of a curved battery.
FIG. 3 is a diagram illustrating portions for measuring the curvature in a curved battery as (1) to (4).
FIG. 4 is a flowchart illustrating a method for deriving process conditions for manufacturing a curved battery by stages according to the present disclosure.

### DETAILED DESCRIPTION

The advantages and features of the present disclosure and the methods for achieving them will become apparent by referring to the aspects described in detail below together with the accompanying drawings. However, the present disclosure is not limited to the aspects disclosed below but may be implemented in various different forms, and these aspects are provided only to make the present disclosure complete and to fully inform those skilled in the art of its scope, and the present disclosure is defined only by the scope of the claims. Accordingly, in some aspects, well-known process operations, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various figures are thus not to scale. Like reference numerals designate like elements throughout the specification. It will be understood that when an element, such as a layer, film, region, or substrate is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate is referred to as being "below" another element, it may be directly below the other element or intervening elements may also be present. In contrast, when an element is referred to as being "directly under" another element, there are no intervening elements present.

Before describing a method for deriving process conditions for manufacturing a curved battery according to an aspect of the present disclosure, a flat battery cell is described.

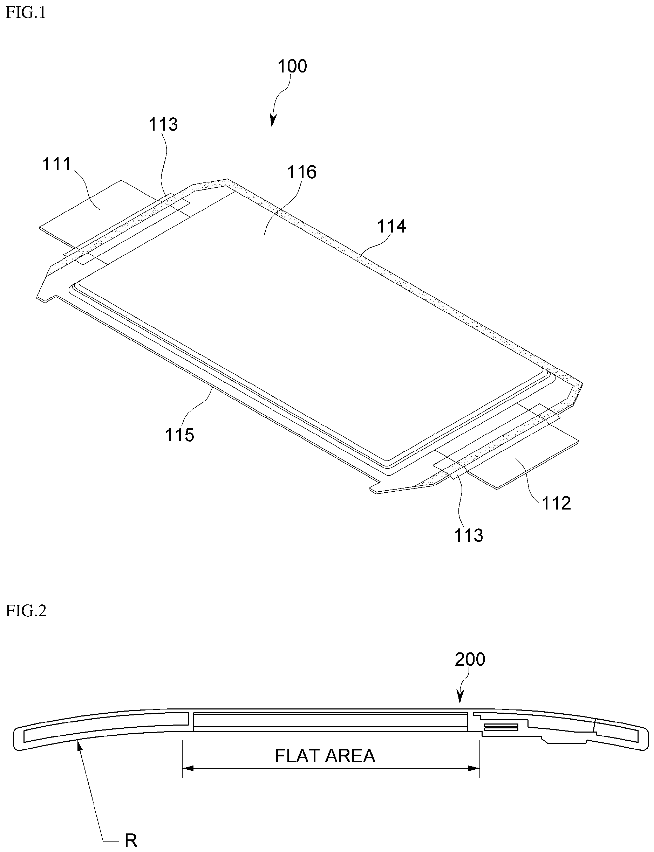

FIG. 1 is a diagram illustrating an example of a pouch-type battery cell, which is a diagram illustrating a flat pouch-type battery cell.

A pouch-type battery cell 100 may include an electrode assembly and a cell case 115 that accommodates the electrode assembly.

The cell case 115 of the pouch-type battery cell 100 may be a pouch-type cell case 115 for accommodating the electrode assembly.

The cell case 115 includes a lower case and an upper case that covers the lower case, and the upper and lower cases may be integrated.

In addition, as illustrated in FIG. 1, connecting portions of the upper and lower cases may be bent and folded.

Also, as illustrated, the upper case may completely cover the lower case, and a sealing portion 114 may be formed in a peripheral portion.

The upper and lower cases may both be formed of a laminate structure including an internal covering layer, a metal layer, and an external covering layer.

The internal covering layer is located inside the cell case 115 based on the metal layer, and since the internal covering layer is in direct contact with the electrode assembly, the internal covering layer has to have insulation and electrolytic resistance, and for airtightness from the outside, a sealing portion in which the inner layers are thermally bonded together has to have sealing properties, i.e., excellent thermal bonding strength.

The metal layer is located between the internal covering layer and the external covering layer and corresponds to a barrier layer that prevents moisture or various gases from penetrating into the battery from the outside, and as a preferable material for the metal layer in contact with the internal covering layer, an aluminum (Al) thin film which is lightweight and has excellent formability may be used.

The external covering layer is located on the outside of the cell case 115 based on the metal layer, and the external covering layer may use a heat-resistant polymer with excellent tensile strength, moisture permeability, and air permeability to protect the electrode assembly while ensuring heat resistance and chemical resistance, and for example, nylon or polyethylene terephthalate may be used.

An accommodating recess 116 may be formed in each of the upper and lower cases, and the electrode assembly may be accommodated in the accommodating recesses 116 of the upper and lower cases.

The electrode assembly accommodated in the cell case 115 may be one of a group consisting of a jelly-roll type electrode assembly having a structure in which a separator is interposed between long sheet-shaped positive and negative electrodes and then rolled up, a stack type electrode assembly including unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 111 and 112 connected to the electrode tabs by welded portions, respectively.

One of the two electrode leads 111 and 112 may be a positive electrode lead connected to a positive electrode tab, and the other of the electrode leads 111 and 112 may be a negative electrode lead connected to a negative electrode tab.

A lead film 113 may be attached to each of the electrode leads 111 and 112.

The lead film 113 attached to the electrode leads 111 and 112 may be positioned between the electrode leads 111 and 112 and the cell case 115 to prevent a short circuit from occurring between the electrode leads 111 and 112 and the cell case 115 and to improve sealing force, thereby preventing leakage of electrolyte, etc.

The two electrode leads 111 and 112 are illustrated as being arranged on opposite sides of the electrode assembly, but they may be arranged on only one side of the electrode assembly depending on the arrangement of the electrode tabs.

Hereinafter, a preferred aspect of a method for deriving process conditions for manufacturing a curved battery according to the present disclosure is described in detail based on the accompanying drawings.

In an aspect of the present disclosure, a pouch-type curved battery is described as an example.

However, the present disclosure is not limited to a pouch-type curved battery and may be applied to other types of curved batteries.

In addition, the pouch-type curved battery may be used in smartphones and may also be used in other devices to which secondary batteries are applied.

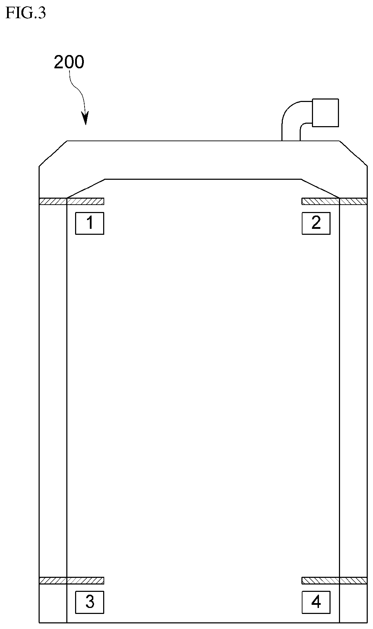

FIG. 2 is a diagram schematically illustrating a side of a curved battery, and FIG. 3 is a diagram illustrating portions for measuring curvature in a curved battery as (1) to (4).

A curved battery 200 is a battery that is bent in a curved shape and may be applied to various IT devices that require a curved design, such as a smart watch, smart glasses, etc. as well as a curved smartphone.

The curved battery 200 may be manufactured by pressing the aforementioned flat pouch-type battery cell 100 with a compression jig at a predetermined temperature and pressure.

Therefore, after manufacturing the flat pouch-type battery cell 100, the curved battery 200 having a predetermined curvature may be manufactured.

The curved battery 200 illustrated in FIG. 2 is an example in which the center portion may be formed flat (FLAT AREA) and a predetermined curvature (R) may be provided from the end of the flat portion of the center portion to the edge to be inclined downward.

The present disclosure relates to a method for deriving process conditions for manufacturing a curved battery having a specific curvature, and positions for measuring the curvature on a bottom surface of the battery may be selected as the left and right portions in a width direction or upper and lower portions in a length direction as illustrated in FIG. 3.

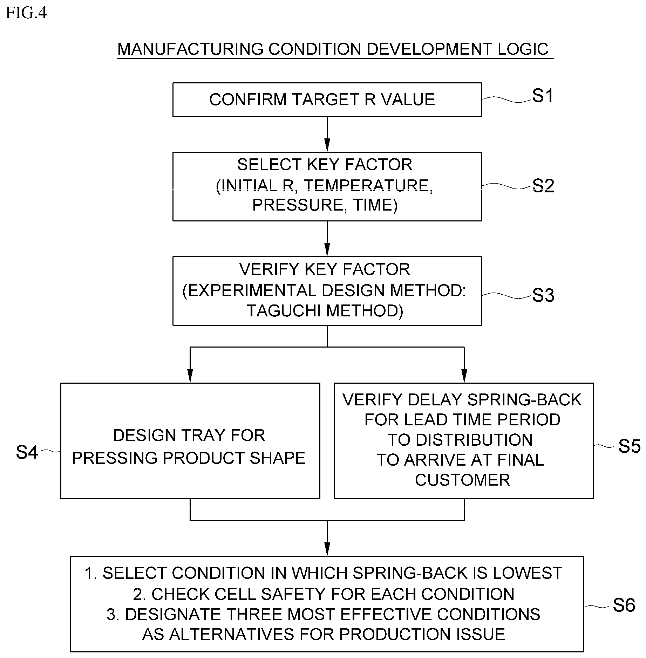

FIG. 4 is a flowchart illustrating a method for deriving process conditions for manufacturing a curved battery by stages according to the present disclosure.

The method for deriving process conditions for manufacturing a curved battery according to the present disclosure may include a first operation (S1) of confirming a target value of the curvature of the bottom surface of the battery, a second operation (S2) of selecting key factors for manufacturing a battery having such a curvature, and a third operation (S3) of verifying the key factors selected in the second operation (S2) by a predetermined experimental design method.

The method for deriving process conditions for manufacturing a curved battery is described as follows.

### [Confirmation of target curvature (R) value - S1]

1. Customer specifications for target curvature value are received and manufacturing target level (center value + tolerance) is established.
2. Since it is not possible to measure the entire battery area, the actual measurement position is selected.
   - A position that may represent the entire battery curvature status is selected.
   - It may also be distributed equally left and right / up and down.
   - An 'inspection method' is discussed with a customer.

### [Selection of key factors - S2]

A certain level of manufacturing conditions is established to create the corresponding curvature.
1. The manufacturing method of a battery cell may be referred to.
   - There is a process of pressing with pressure/temperature/time when manufacturing a battery cell.
   - The pressure/temperature/time are not exceeded when manufacturing a battery cell. For example, when manufacturing the flat pouch-type battery 100, the pressure/temperature/time may not be exceeded (may be within 80% of the battery cell manufacturing conditions (battery cell before a curving process) considering the safety margin).
2. A specific curvature is manufactured, and since the spring-back is more likely to occur than the curvature value represents at the time of pressing, the specific curvature is selected to be smaller than the target curvature (R) value.
3. Accordingly, a total of four conditions are selected as manufacturing conditions.
   - Compression equipment curvature value (curvature value of an equipment jig), pressure at the time of pressing, temperature at the time of pressing, and pressing time

### [Verification of key factors -S3]

### 1. Equipment manufacturing

It is important to manufacture equipment for manufacturing actual curved batteries, and the equipment is manufactured considering an appropriate size/convenience function/stability function considering the production plan.
(1) The compression equipment (jig) uses insulated metal. (Accordingly, it may withstand pressure.)
(2) An escape space is created so that components other than a battery body are not pressed during a battery mounting process.
(3) Various safety sensors are installed because it is dangerous if pressed while a person's hand is present.
(4) Since it is important to mount the battery in the 'center' and then press, springs, etc. are utilized when manufacturing a mounting/positioning guide portion.
(5) Since equipment heated to a high temperature is used, the basic heating time/surrounding safety conditions, etc. are checked.

Through the equipment manufactured in this manner, for the 4 conditions to be verified (curvature value of the pressing jig, pressure during pressing, temperature during pressing, and pressing time) / 3 levels (different values), a battery is directly manufactured and data is inspected/analyzed by 'inspection position' planned in the first operation, which is the operation of establishing the target curvature (R) value.

### 2. Manufacturing and initial measurement of curved battery with actual curvature

The effective ranking of each condition is selected by utilizing statistical techniques and condition values that produce a result value closest to the target curvature value are collected.
(1) There is no need to specify an experimental design method, and each technique that is determined to be effective is used.
(2) It is divided into 3 levels by condition (see Table 1 below).
   - As a result, a total of 4 conditions at 3 levels of experimental plans (design of experiments (DOE)) are made.
(3) After manufacturing the battery, the initial inspection is performed at least after the 'temperature' returns to room temperature. (Store at room temperature for about 3 to 4 hours.)

Among experimental design methods, the Taguchi method is an experimental method that allows the optimal conditions of experimental factors and levels in product design to be searched inexpensively and rapidly.

This is a method that complements the advantages and disadvantages of the full factorial experiment and the one-factor-at-a-time experiment among experimental methods. An orthogonal array is created, the level of each factor is determined, and then the optimal conditions are searched with the minimum number of experiments.

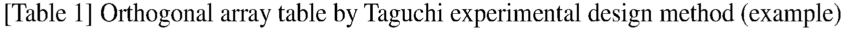

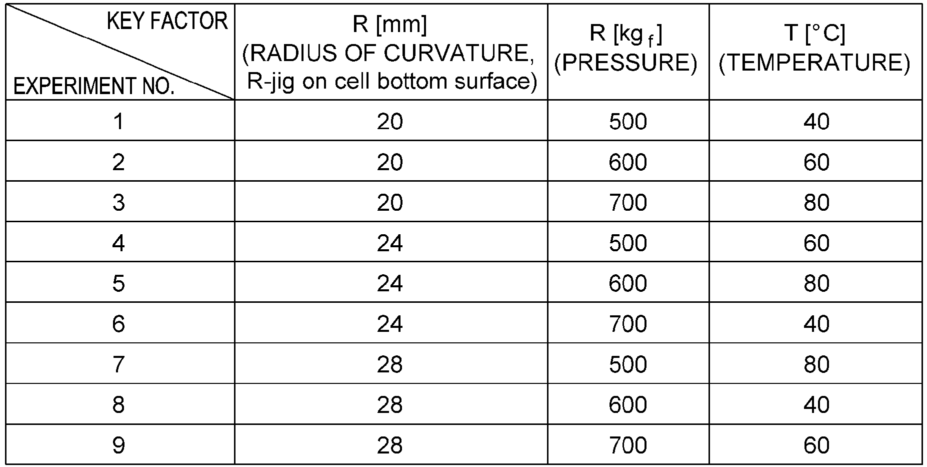

Table 1 above is an example of an orthogonal array table by Taguchi experimental design in which three factors, radius of curvature, pressure, and temperature, are arranged into three levels each.

That is, the radius of curvature is set to 20 mm, 24 mm, and 28 mm, the pressure is set to 500 kgf, 600 kgf, and 700 kgf, and the temperature is set to 40°C, 60°C, and 80 °C.

In the present disclosure, in addition to the three factors in Table 1, it is preferable to set a pressing time to 3 seconds, 5 seconds, and 7 seconds, to proceed with four factors with three levels.

### 3. Tray design (selection of tray curvature based on initial measurement value) - S4

A tray design corresponding to the shape of a curved battery manufactured with a shape having a curvature is required.
(1) The curvature value of the tray is not the same as a final target curvature value.
(2) Since the battery is packaged in a tray immediately after being manufactured, it should be a tray manufactured with at least initially measured value as a battery curvature value. This is because if it is adjusted to the target curvature (R) value, it may be forcibly straightened due to the spring-back phenomenon.

### 4. Spring-back verification (natural leaving) - S5

Whether there is a spring-back phenomenon in which the curvature is restored to its original state after a certain period of time after production of the battery, and, if so, the extent of restoration is checked.
(1) When conducting a design of experiments (DOE) for selecting key factors, it is necessary to continuously leave the battery for a certain period of time after production of the battery, and the conditions under which the amount of spring-back is the least during the leaving time and whether the amount is within the customer's target curvature value should be checked.
(2) The leaving time should be the time/date from a manufacturing line to a customer's final arrival and use.

### 5. Comprehensive spring-back verification (confirmation of curvature value after battery product packaged in tray arrives to final customer) -S6

A change in curvature value considering various situations above is checked, but ultimately, the actual condition after logistics movement to the customer should be checked.

After finding the optimal conditions confirmed through the first DOE and the conditions with the least spring-back phenomenon secondly, the final comprehensive verification is performed once more within those conditions.

### [Performance/Safety Verification - S6]

After forming the curvature according to the manufacturing conditions for forming the curvature, whether there is any abnormality in the final performance/environmental reliability/safety of the battery should be verified.

The 'key factor verification' above is a process of reviewing a physical shape, and it is necessary to verify whether there is any abnormality in the unique performance/environmental reliability/safety (capacity, short circuit safety, etc.) of the battery.

Performance/safety verification may be performed by selecting all items of the basic performance/reliability/safety of the battery or only some items that are determined to have an impact. (Items generally requested by customers + additional items of their own)

### For example,

Performance: Capacity of battery pack, various functional tests (electrical function), pouch wrinkles and the like in simple appearance, etc.

Environmental reliability: High temperature and high humidity environment, drop environment, thermal shock environment, etc.

Safety: Tear/leakage, electrode detachment, electrode slip, effect of pouch wrinkles, separator change, pouch damage, sealing damage, overcharge, hot box, etc.

### [Final completion - Condition priority and optimal condition table creation - S6]

Two to three optimal conditions found according to the above series of orders (can be applied in combination depending on the situation) are prioritized.

Since there may certainly be cases in which the target curvature value is not satisfied under certain conditions during actual mass-production, it is important to set an option priority.

If possible, all data verified by the design of experiments (DOE) are recorded/transferred as manufacturing know-how so that it may be used to modify conditions when troubleshooting occurs.

The present disclosure described above is not limited to the aspects described above and the accompanying drawings, and it will be apparent to a person skilled in the art to which the present disclosure pertains that various substitutions, modifications, and changes may be made within a scope without departing from the technical spirit of the present disclosure.

## Claims

1. A method for deriving process conditions while using a pressing jig for manufacturing a curved battery, the method comprising:
a first operation of checking a target value of a curvature of a bottom surface of a battery;
a second operation of selecting key factors for manufacturing a battery having the target value of the curvature;
a third operation of verifying the key factors selected in the second operation by a predetermined experimental design method thereby determining verified key factors, and
forming a curved battery having the target value for the curvature with the pressing jig using the verified key factors.

2. The method of claim 1, wherein, in the first operation, a position in which the curvature is to be measured on the bottom surface of the battery is selected as widthwise left and right portions or lengthwise top and bottom portions.

3. The method of claim 1, wherein the key factors to be verified are a curvature value of the pressing jig, a pressure during pressing, a temperature during pressing, and a pressing time.

4. The method of claim 3, wherein the pressure and temperature during pressing with the pressing jig and the pressing time in the pressing jig are set to within 80% of pressure, temperature, and time used when manufacturing the battery as a flat battery prior to forming the battery as the curved battery.

5. The method of claim 3, wherein the curvature value of the pressing jig is selected to be smaller than the target value of the curvature of the bottom surface of the battery.

6. The method of claim 3, wherein, in the third operation, after manufacturing batteries with the four conditions of the key factors to be verified, the curvature value of the pressing jig, the pressure during pressing, the temperature during pressing, and the pressing time at three different levels, the curvature after each level is measured at each position on the bottom surface of the batteries, wherein each position is selected in the first operation.

7. The method of claim 6, wherein a ranking is determined among the four conditions of the curvature value of the pressing jig, the pressure during pressing, the temperature during pressing, and the pressing time using statistical techniques, and a condition value that produces a result value of curvature closest to the target value of the curvature is collected.

8. The method of claim 6, wherein, after manufacturing the batteries with the four conditions of the curvature value of the pressing jig, the pressure during pressing, the temperature during pressing, and the pressing time at three levels with different values, the batteries are stored at room temperature for 3 to 4 hours, and then, the curvature of each battery is first measured.

9. The method of claim 8, wherein a tray having a curvature corresponding to the first measured curvature of the battery is selected.

10. The method of claim 9, wherein, after manufacturing the batteries for four conditions of the curvature value of the pressing jig, the pressure during pressing, the temperature during pressing, and the pressing time at three levels with different values, whether there is a spring-back phenomenon in which the curvature returned to its original state is determined and to what extent.

11. The method of claim 10, wherein, after manufacturing the batteries, a condition of an amount of spring-back occurrence during a certain leaving time and whether the amount of spring-back occurrence is within the target curvature value are checked.

12. The method of claim 11, wherein, after batteries packed in the tray are removed, the curvature of the batteries is measured to find the conditions where spring-back phenomenon is least, and then a final verification is performed.

13. The method of claim 8, wherein, after manufacturing the batteries for four conditions of the curvature value of the pressing jig, the pressure during pressing, the temperature during pressing, and the pressing time at three levels with different values, performance, environmental reliability, and safety of the batteries are verified.
